# EUROPEAN PATENT SPECIFICATION

(11) **EP 2 624 201 B1**
(45) Date of publication and mention of the grant of the patent: **20.06.2018**
(21) Application number: 12382039.1
(22) Date of filing: 01.02.2012
(51) Int. Cl.: G06T 1/00

(54) **Securing method for securing an object description**
Sicherungsverfahren zur Sicherung einer Objektbeschreibung
Procédé de fixation pour fixer une description d'objet

(43) Date of publication of application: 07.08.2013
(73) Proprietor: FABRICA NACIONAL DE MONEDA Y TIMBRE - REAL CASA DE LA MONEDA, 28009 Madrid (ES)
(72) Inventor: Gamo Aranda, Javier, E-28009 Madrid (ES); Borruel Navarro, Luis, E-28009 Madrid (ES)
(74) Representative: ABG Patentes, S.L.

(56) References cited:
- HERNANDEZ M C ET AL: "Robust watermarking based on histogram modification", MULTIMEDIA AND EXPO, 2009. ICME 2009. IEEE INTERNATIONAL CONFERENCE ON, IEEE, PISCATAWAY, NJ, USA, 28 June 2009 (2009-06-28), pages 1748-1751, XP031511115, ISBN: 978-1-4244-4290-4
- MARIOS A GAVRIELIDES ET AL: "Color Features for Image Fingerprinting", 1 January 2006 (2006-01-01), ADVANCES IN ARTIFICIAL INTELLIGENCE LECTURE NOTES IN COMPUTER SCIENCE;LECTURE NOTES IN ARTIFICIAL INTELLIG ENCE;LNCS, SPRINGER, BERLIN, DE, PAGE(S) 494 - 497, XP019030701, ISBN: 978-3-540-34117-8 * abstract * * page 495, paragraph 3 *

## Description

### Object of the Invention

The present invention is a securing method for securing one or more objects, mainly documents, which allows establishing security measures for subsequently distinguishing if said object is fake or genuine. The term "genuine" will be used for referring to the opposite of "fake".

The invention features a method of generating a securing image applicable to an object such that its characterization is possible by means of using an image prior to its generation. A colour list which is the one used for generating the image used in the securing is generated from this first image.

### Background of the Invention

One of the fields of the art with a more intensive development is the field of securing physical documents mainly the notes of a specific currency. Once designed, the physical documents must be produced by an issuing authority and therefore the security measures to be applied must be such that they make its production feasible.

However, this production possibility and the growing ease in obtaining machines and devices capable of scanning, creating and printing documents in high quality by the general public make forging easier.

The security measures incorporated by an object, particularly a required not easily forgeable document, must be such that, even by knowing the type of security measures used, the way of fraudulent reproduction is not obvious when the physical document is available for analysis.

There is an added difficulty in the present scope of the art which is shared with those sectors of the art requiring colour treatment. One of these sectors of the art is that of graphic arts. Colour is the perception of the light emitted by an object with a specific spectrum, it is therefore a subjective experience tied to numerous psycho-visual factors. The eye of one person perceives colours differently to that of someone else's, such that the way of quantifying what colour a specific region of the surface of an object has been the object of study for a long time and it is not completely solved.

The more generic way of establishing the colour of a specific region of the surface of an object, for example a paper, is defining a representation domain of a group of colours, where the colours defined in the domain have an associated group of different coordinates for each colour. A colour existing in said definition domain can thus be expressed by its coordinates in that domain.

The more common domains are those defined by means of RGB (Red Green Blue) coordinates, for devices such as a computer screen, or CMYK (Cyan Magenta Yellow Black) coordinates for colour representation which are reproduced using inks.

Some of the more significant problems of these representation systems are the following:
- The RGB colour coordinate system is based on the emission percentage of red, green and blue colours (for example in the range of 0-255). Therefore, different devices reproduce different colours for one and the same coordinates, depending on how said device reproduces each of the basic colours.
- The CMYK system has the same difficulty where printing one and the same colour on different supports can have different results.
- There is not a bijective relationship between coordinates expressed in different standardised coordinate systems.

There are other colour coordinate systems, among which include the L*a*b* system (L is the luminosity, A and B represent the dimensions of the colour), which will be those used in the embodiments of the invention. In contrast to how it occurs in the RGB and CMYK colour models, the L*a*b* system, apart from having been designed so that its variations are more lineally suited to human colour perception, it serves as independent colour model of the device reading it, therefore being one of the best references.

The L*a*b* coordinates allow a three-dimensional representation of the colour such that each one of the coordinates of the space represents one coordinate of the colour. A simple change of variables from Cartesian variables to cylindrical variables allows converting the L*a*b* coordinates into Lch coordinates where now L continues being the luminosity, C is the colour saturation and h is the hue.

Notwithstanding that said, the invention is not limited to the use of one coordinate system. The definition domains are limited to those coordinate regions where colours are physically feasible. For example, when the luminosity L is maximum, the variation of the rest of the coordinates does not give rise to different and distinguishable colours since the total reflection of light is being represented.

The security measures which are based on printing complex and difficult to reproduce images, can be overcame with high resolution capturing devices and with digital printers that reproduce them with the sufficient fidelity for the document to be considered as genuine.

Algorithms such as those described in the patent with publication number US20070291288A1 by means of which it is possible to carry out the segmentation of images studying bivariable histograms are known in the analysis of images captured by means of a capturing device. In algorithms of this type the histograms are tools for analyzing existing images which allows discriminating, for example, the most repeated pixels of the image. These processes do not establish ways of providing an image which allows securing a document.

The invention proposed allows adding security measures to an object such that, even knowing the security measures used, the secured object is not easily reproducible. These securing means allow a posteriori distinguishing between fake or genuine objects with a very high level of confidence.

### Some previous definitions

For the purpose of simplifying the notation and making use of specific cases by way of example, mainly in the description of the invention and of the different embodiments, allowing an easy understanding of the invention, a certain notation is introduced facilitating the writing of certain functions. The domains which shall be referred to as D and DO in the embodiments will particularly be rectangular domains discretised in each of its variables.

The region DO is the domain in the physical space and corresponds to the image intended to be incorporated in the secured document. The region D is the domain in variables A, B where certain conditions allowing constructing the image of the domain in the physical space are proposed.

The region D in variables A, B in the embodiments will have a variation range [0, Aₘₐₓ]x[0, Bₘₐₓ] . In the embodiments the region DO in coordinates (x, y) will also have a variation range [0, xₘₐₓ]x[0, yₘₐₓ]. Modifying the variation ranges for other specific not necessarily rectangular cases for example by means of a conformal transformation is easy.

An image in any of the regions D or DO is defined when the pixels, the position of which is determined by the coordinates (x, y) for DO or (A, B) for D, are assigned with a specific colour. Pixel is a small region (depicted in the drawings which will be used in the description of the embodiments by small squares) resulting from discretization. The domain position of a pixel must be pre-established, for example by means of its central point coordinates. Therefore, when speaking of the coordinates of a pixel, they refer to the coordinates of the reference point of this pixel. Likewise, when speaking of the colour at a point it should also be interpreted as the colour associated with the pixel at that point.

The colour assigned to a pixel can be represented as RGB(x, y) or RGB(A, B) if the coordinate system used for representing the colour is RGB; L*a*b*(x, y) or L*a*b*(A, B) for the L*a*b* system; or Lch(x, y) or Lch(A, B) for the Lch coordinate system. An image will be the definition of the RBG, Lab or Lch function for all the points of the domain.

There is a correspondence which shall be referred to by means of the function T between one coordinate system and another. Therefore, if the default coordinate system is the L*a*b* system, a point with a colour in the RGB coordinate system will be able to be transformed by means of the function T (RGB). It has already been seen that transformations of this type are not unique and depend on the device. For the most accurate possible colour representation which does not depend on the device, the use of transformations adapted to the device is known in the state of the art. These functions are known as "profiles". T(RGB, P) would thus be a transformation of the RGB system to the default system (for example L*a*b*) according to the colour profile P. In actual fact profile P is that which establishes a specified transformation.

Defining the "distance between colours" is also necessary. The function δE(L*a*b*1, L*a*b*2) will be a function quantifying the distance (or difference) between two colours depicted in this example in the L*a*b* coordinate system. In practice distances of this type go further than the Euclidean distance and are suitably considered for taking psycho-visual aspects, for example, into account.

Defining, for example, energy functions E(x, y) for a specific pixel will also be possible. This energy function allows implementing the minimization algorithms of a scalar function (such as energy), as will be seen below. For these applications, in actual fact there is less interest in knowing the energy value associated with a pixel than the difference of energy between two pixels with a specific colour.

### Description of the Invention

Characterization of an object is understood as assigning an identification element on which not only is the discrimination of an object with respect to other objects is possible, but the identification element also allows carrying out some kind of quantifiable discrimination measures.

This second attribute applicable to the identification element is that with a greater interest. In the embodiments of the invention this characterization (and securing) is carried out by assigning an image created by means of a method according to claim 1 to the object.

Given an image is assigned to an object such as that indicated after carrying out the different steps according to the invention, assessing said image which allows establishing, for example, whether said object meets a certain discrimination criteria for assessing whether the object is fake or genuine is also an aspect of the invention.

The invention is of special interest in the area of document security, for example in treating notes of a specific currency. Secured documents refer to those documents which incorporate a characterization element and which are therefore susceptible to being assessed with respect to a reference for subsequently determining if the documents are fake or not. Therefore, securing is a way of characterising an object in a not easily forgeable manner, i.e., characterising an object in the same manner only from the information obtained from another previously secured or characterised genuine object is not simple.

The particular way of assigning attributes to an object allowing its characterization is by assigning colours in a specific region of the surface of the object. The more common way of carrying out the invention at the time of assigning a colour is by means of the printing, however it is not the only process, since the material from which the object is made of may already have a specific colour and colour variation in certain directions of the space. These ways of making sure that the object has a specific colour are also ways of characterizing the object.

There are small variations when readings of the colour are carried out even when working with genuine documents. This is not only true due to the variations themselves as a result of the production and printing processes, but also to the devices used in the reading or to the environmental conditions in which the verification is performed.

To discriminate whether or not a specific document (for example a note of a specific currency) is fake, ascertaining what colour a region of the surface of the object has would not be sufficient for concluding whether or not this is fake. The way of identification must allow carrying out a measure with respect to a reference value allowing that the small printing variations of the document or of its subsequent reading by measuring means for measuring the colour in a group of points, do not prevent concluding whether the document is genuine or fake with a high level of confidence.

The simple printing of a complex drawing pattern with difficult to reproduce colours are not sufficient security measures for putting documents which could be analysed and reproduced with high quality devices into circulation.

The present invention proposes a securing method which allows establishing reference patterns and subsequent comparisons for discriminating fake and genuine objects, which can neither be defined nor are obvious from studying a specific group of original objects (such as documents) for their subsequent forging. The method is particularly safe since the above is true even when knowing which characterization method is being carried out. In other words, the security of the characterization is intrinsic to the applied method and does not depend on whether or not this is known.

The method according to the invention allows minimizing the errors in the discriminating process applied after securing, mainly the errors due to variations which are produced as a consequence of both the production process and the noise of the devices used in image capture. The main cause of this good behaviour is mainly due to the statistical nature and particular way of generating images.

The securing method for securing an object according to a first aspect of the invention comprises the following steps:
*a) establishing a device independent colour coordinate system with variables (s₁, s₂,...,sₙ) n>*=*2 being the number of coordinates of said system with the variables (s₁, s₂,...,sₙ) defined in the physically feasible colour domain,* Not all the colour coordinate systems have the same number of variables n. A consequence of this is that there are colour coordinate systems which can give rise to a representation of the same colour in a specific device by fixing different points of the coordinate system. The definition domains are limited to physically feasible colour domains as have been defined.
*b) establishing a pair of variables A, B from among the coordinates (s₁, s₂,...,sₙ) of the space of coordinates of a colour space, with different A and B coordinates,* The method according to the invention requires the selection of two different variables within the n coordinates of the selected colour coordinate system. These variables are those which will be used for establishing the coordinates in which the first image will be designated. In some of the embodiments, only by way of example, the Lch coordinate system, a system of three coordinates *(s₁*=*L, s₂*=*c, s₃*=*h)* will be used and the two different selected variables will be L (luminosity) and h (hue).
*c) establishing an region D in the two-dimensional space of coordinates (A, B),*
*d) establishing a discretization in the variables A, B of the region D,*
e) *establishing a function f(A,B) the functional image of which is a positive integer value,*
   - *optionally establishing a correspondence between the values taken by f in the region D and a colour palette; and, providing a first characterization image on the region D such that each discretization point of the coordinates (A, B) is assigned with the colour corresponding to the value of f(A, B) given by the colour palette,*
      By making use of this option the invention gives rise to two images, the one which will be referred to as the first image and the one which will be referred to as the second image. The first image is the image which has been mentioned as very important, although not essential, to allow discriminating whether the secured object is fake or genuine after securing. This first image is the one serving as a reference or comparison pattern. The second image is the one which is applied to the object so that it is considered secured.
      It is said that the first image is not essential since the function f(A, B) can be used as a reference or comparison pattern without necessarily having to represent said function by means of an image. The different steps of the method according to the invention establish the way of constructing both images.
      This group of five steps allows providing the first image. The discretised region of the two-dimensional space of coordinates (A, B) is established, in which an integer is defined on each discretization point. This integer is f(A,B). The integer f(A, B) allows two definitions:
      - A first definition is that of the colour of the pixel of the first image associated with the discretization point of the region D of coordinates (A, B) according to a colour palette. This colour palette is a table which relates each integer value f(A, B) to a pre-established colour. The mentioned first image is obtained after assigning all the colours of the discretised region D according to the values f(A, B) and the colour palette.
      - Another definition is that of the number of repetitions which will be in the group of pixels of the second image verifying that the coordinates A and B thereof are the same as those of the point where f(A, B) has been taken.

      As has been pointed out, at least the first image is obtained after carrying out these five steps since the pre-established colour palette defines a colour for each coordinate (A, B) of the region D together with the function f.
*f) establishing a region DO in the physical space of coordinates (x, y) corresponding to a surface area of the object,*
*g) establishing a discretization in the variables x, y of the region DO such that the number of discrete points m of the region DO is at least the sum of all the values f(A, B) for all (A, B) of the region D,*
*h) providing a colour list according to the following sub-steps:*
   *h.1) establishing a colour with the value of the colour coordinates corresponding to the variables A and B by taking the value A and B for each discretization point with coordinates (A, B) of the region D; and, repeated in the list as many times as indicated by the function f (A, B) the list making up a total of m elements*
   *h.2) assigning values to the rest of the coordinates (s₁, s₂,..., sₙ), different from A and B, in the m elements such that the colour is physically feasible,*
*i) assigning the group of the m elements of the colour list to the m discretization points of the coordinates (x, y) of the region DO,*

The region DO is a region of the physical space of coordinates (x, y) corresponding to an area comprised on a surface of the object to be secured.

This area is made up of a group of pixels forming the image, where the position of each pixel is determined by said coordinates (x, y). Providing a second image in the region DO means that each pixel resulting from the discretization is assigned with a colour.

The invention establishes that this second image is generated from a colour list. When speaking of a colour list it should be interpreted as a group of colours in which repeated elements are allowed. Given that each pixel of the region D has an associated integer value which can be greater than 1, what is common is that the number of pixels of the region DO is greater than the number of pixels of the region D. The number of pixels forming, at least, the second image is obtained by adding all those integers.

Generating the second image therefore starts from generating a colour list of *m* elements. Determining the colour of each of the *m* elements is carried out by assigning the values A and B to the coordinates which represent A and B; and the rest of the free variables of the colour coordinate system (s₁, s₂,...,sₙ) is established according to a pre-established criterion. The rest of these variables can be the same for all those elements sharing the same value of A and B, but they can also be different (for example generated randomly) as long as the coordinates are within the physically feasible colour domain.

The colours of each pixel of the second image are distributed by assigning a colour to each pixel of the second image once the list of elements is generated.

If this assignment is random the second image resulting from this assignment does not allow identifying any pattern even though the assignment of the values of f(A, B) does have a specific pattern. If the values of f(A, B) do have a pattern, this pattern is visually identifiable in the first image but not in the second image. The second image is that which is applied to the secured object.

Reorganising the colours taken from the list providing additional properties making forging more difficult is possible according to various embodiments in this penultimate step.
*j) providing the object with the second image on the region DO of its surface.*

In this step it is determined that the second image is the one used to be transferred to the physical object, for example by means of a printing device.

The methods according to the dependent claims, as well as the combination thereof, are considered incorporated by reference to this description as will be described in the embodiments of the invention.

A second aspect of the invention is the discrimination method which allows distinguishing objects secured by means of the method according to the first aspect of this invention, and which therefore are genuine, from the fake objects. This method, according to claim 13, will be described further below in the section devoted to the description of the embodiments.

A third aspect of the invention is a secured document after having provided with an image by carrying out a method according to any of claims 1 to 12.

A fourth aspect of the invention is an apparatus adapted for carrying out the securing discrimination according to the method of the second aspect of the invention.

### Description of the Drawings

The foregoing and other features and advantages of the invention will be more readily understood from the detailed description according to a preferred of embodiment, given only by way of illustrative and non-limiting example, with reference to the accompanying drawings.
Figure 1 schematically shows the two definition domains on which two images are provided, the region D in which the first image appears and the region DO in which the second image, the one used in securing the object, appears.
Figure 2 schematically shows an embodiment where an image is applied to a document for securing it by means of a device adapted for carrying out the securing according to an embodiment.
Figure 3 schematically shows an embodiment where discriminating the documents in a flow of supposedly secured documents is carried out by means of a device.
Figure 4 shows a securing method according to a third embodiment in which a specific mask is reproduced, both in the region D and in the region DO, only that in this case with a greyscale.
Figure 5 shows a method according to a fourth embodiment which allows eliminating information from the second image before being applied to the object to be secured.

### Detailed Description of the Invention

The present invention, according to the first inventive aspect, is a securing method for securing an object by means of incorporating an image, which has been identified as "second image", to the object. This image verifies, among other things, the condition of corresponding a "first image" established in the generation process according to claim 1 to the "second image", which allows characterising the secured object and then particularly discriminating secured objects in a genuine manner.

This image is formed by a group of pixels identifiable in a discretised region DO which are positioned in the domain by means of the central point coordinates thereof. This region DO does not necessarily have to be square or rectangular. However, for simplicity, embodiments with rectangular variation domains, or as a particular case, squares will be considered in all the cases.

This restriction makes the description easier. This restriction is not very severe since it is always possible to establish a rectangular area completely containing it in a related and limited domain with any border. The points of the rectangle which are not in any border domain can be assigned with a single colour which will not interfere in the discrimination methods. The easy treatment of non-rectangular domains is possible by taking this particularity into account.

### First securing method

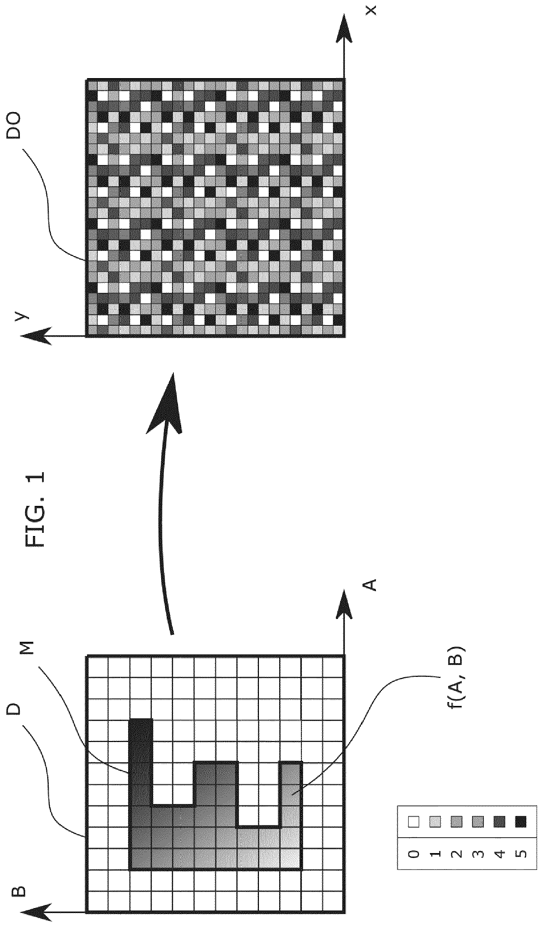

Figure 1 shows two discretised square domains. The region D on the left is the domain with two variables (A, B) selected from the variables of the coordinated space selected for representing the colour, for example (L, c, h). The first generated image which is the one which will allow discriminating the secured documents has been overlapped in this first domain. The domain on the right is the region DO on which the second image generated according to the first aspect of the invention has been overlapped. This image is the one which is applied to an area of the physical object to be secured. Although Figure 1 depicts the regions D and DO, the depiction is schematic and does not correspond to an actual example where a correspondence would exist between the integer value represented in each discretization point of the region D and the number of colours in the region DO. The purpose of this and the following schematic drawings is that of visualising the general method the text description being that which establishes and describes the steps of the method which must be followed according to each embodiment.

Discretising either domains gives rise to a group of pixels which in this case are small squares covering the square area given by the domain. The domain is identified by a border with a thicker line. Each of these pixels, if the square represents an image, will be assigned with a colour feasible in the coordinate system used, for example in the Lch system.

The securing method starts by discretising a region D. In the embodiment of Figure 1 the region D is a square where discretising both A and B determine a pair of values (A, B). An integer value is assigned to each discretization point of the square. The representation of region D shows a colour palette depicted according to a greyscale ranging from white to black. Therefore the integer 0 according to this colour palette is associated with white; and the integer 5 is associated with black. In colour this greyscale would be a colour gradient. The palette establishes an association between integers and colours which do not necessarily have to be organised according to a gradient nor being limited to a maximum of 5 as shown in this embodiment.

Assigning an integer value to each discretization point is that which defines the function f(A, B). In this particular embodiment, representing a pixel (each of the small squares) with the colour established by the colour palette and according to the value f(A, B) corresponding to the point (A, B) of the lower left corner of each pixel gives rise to the first image. In this embodiment the first image shows a shape similar to an "E" according to a value of greyscale gradient over a white background. This is due to the integer values which increase upwards and to the right within the irregular "E-shaped" border (M); and the values 0 outside the border (M).

This image will subsequently allow discriminating genuine secured objects and fake ones as will be described.

In turn, the function f(A, B) defined in the region D allows generating a list of elements (not depicted in Figure 1). The elements of this list are colours to be assigned to the image which can be depicted in the region DO shown on the right.

As many elements of the colour list as indicated by f(A, B) are generated for each coordinate point (A, B) of the region D. Colours from the list will have preset thereto the values of the coordinates A and B, the rest of the colour coordinates having to still be established.

Different criteria for setting the rest of the variables result in different ways of carrying out the invention and particularly, as will be described further below, an example according to claims 3 or 4 in which characterising a secured object is possible by means of two images instead of one.

Other ways of carrying out the invention establish constant values and another way of carrying out the invention makes use of randomly generated values. In any case, the colour coordinates of each element from the list must be such that the colour is physically feasible.

Each colour is distributed in a coordinate point (x, y) of the discretization of region DO once the colour list is generated. The discretised region DO must have at least the *m* number of elements from the colour list, i.e., *m*=∑*_{i,j}f*(*Aᵢ,Bⱼ)* for every *i, j* of the discretization of region D. If the square region DO of this example has a number of discretization points greater than *m,* it is possible for example to complete with a colour since, as will be seen, adding a repeated colour outside the border M does not affect the subsequent discriminating process.

In the embodiment of the invention a random distribution of the elements from the list in the region DO has been carried out giving rise to a colour mosaic without showing an identifiable pattern which the first image shows.

### Discrimination method

The securing method for securing an object, for example a document, provides the second image in an area of the object. A secured document will have an area with the second image obtained for example by means of printing.

The securing method has established:
- a colour coordinate system,
- a reference pattern established by, either a function f(A,B); or a colour palette; and a first image based on said colour palette,
where none of this data is known by the person having the secured document. This data must be safeguarded by the authority responsible for securing for its subsequent use in the discriminating process.

The reference pattern (the function f(A, B) or the first image) becomes a reference which is recorded by storage means preferably computer storage means.

The discriminating process for discriminating a document which has been secured according to the first aspect of the invention is carried out according to the following steps:
- a threshold value is established to enable defining an acceptance or rejection criterion.
For each object:
- the securing image of the object is captured by means of image capturing means,
- a histogram of the image captured in the variables (A, B) used in the securing method is generated preferably using the colour palette which is also used in the securing method,
- the degree of correlation between the histogram function characterising the object and the function f(A, B) associated with the first reference image; or, between the histogram function and a function defined from the first image is measured,
- those objects the correlation of which is less than the threshold value are rejected and the rest is accepted.

Both a function f(A,B) with integer values in throughout the region D and a first image reflecting, by means of a colour palette, the values taken by the function f(A,B) is generated in the method according to the invention. Since the image is a matrix of values in a specific colour coordinate system, the discrimination can be carried out by means of comparing the captured image and any of the two functions, or f(A, B), or the colour expression in the colour system in which the first image is expressed. The representation as first image additionally allows carrying out visual comparisons between the captured image and the first image; and therefore not only comparisons by means of calculated correlations calculated by a processing unit.

The captured image and the second image are different even if the object on which the image is captured is genuine. The captured image results from acquiring an image through an image sensor the resolution of which does not have to match the pixels which generated the image, or make use of the same colour representation. What is relevant is the degree of correlation existing between both images. In other words, the second image, after being printed and subsequently captured by image capturing means, will have a different resolution and distorted measurements since, as has been explained with respect to the first image, the capturing means do not scan each of the printed pixels but in most cases the reading is of regions in which there are more than one printed pixel of the first image.

It has been mentioned that the operation of assigning the colour list to the discretization points of the region DO can require completing with additional colours and that this process does not affect the discrimination method. If the colour is the same or at least shares the same values A and B, the histogram has all these colours at one and the same point and a single point does not considerably change the degree of correlation between the histogram function and the first reference image; or the assessment of the degree of correlation can take this point into account and dismiss it.

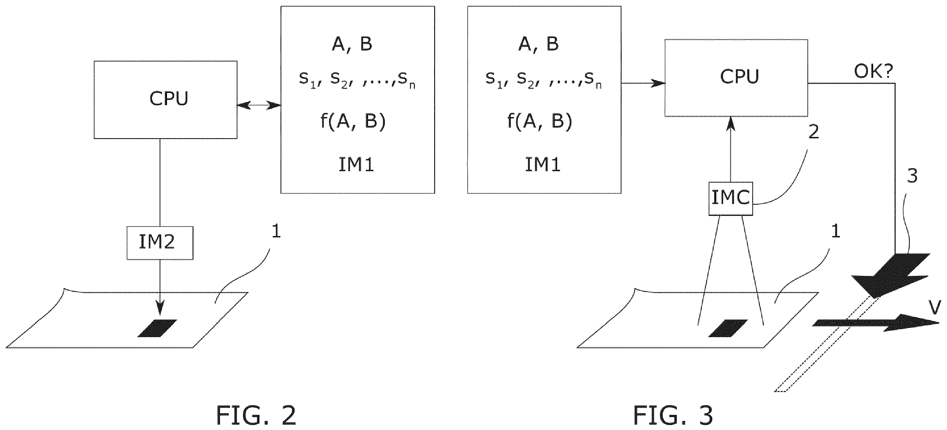

Figure 2 shows an embodiment for securing documents. Figure 2 schematically shows a central processing unit (CPU) carrying out the initial generation of a function f(A, B) once the region D is established, a colour coordinate system (s₁, s₂,...,sₙ), the variables A and B; as well as the values defining f(A, B). The method also generates the first image identified in this embodiment such as IM1. These parameters are not disclose and are stored, or at least are only known by the issuing authority of the secured objects.

The same method also provides a second image, IM2, which is the one used to be applied on the secured object, in this case a document (1) on which the image is applied by means of printing techniques.

Figure 3 schematically depicts an embodiment of a discrimination method applied to a continuous process (such as for example an application process for large volumes of documents) where these documents flow at a specific speed (V) along transporting means. The secured documents (1) pass beneath an image sensor (2) capturing the printed image (IMC). This captured image (IMC) is transmitted to a central processing unit (CPU) which carries out a discrimination method where a comparison is established either with f(A, B) obtained as seen in Figure 2 or its image IM1. It is understood that the comparison is carried out by means of a correlation operation as has been specified in the discrimination method.

In any of the cases the calculation of the degree of correlation will render as a result, under the criterion establishing the use of a threshold value, whether the specification is considered genuine or fake.

In this embodiment the signal containing the result from the discrimination is carried to an actuator (3) responsible for separating documents object of the discrimination from those documents which have been established as fake from the flow.

The mere digital reproduction of the original, the clearest example of which would be a colour photocopy, but which could be greatly sophisticated, could be considered as the simplest way of reproducing the secured document. However, the transformations of colour spaces which are carried out (by software over which there is no control) using colour profiles introduce distortions identifiable by the discrimination method even in the better calibrated capturing and printing systems.

An advantage of the present invention is that the discrimination is slightly affected by the use of low resolution image capturing means or that these do not match the capturing sensor pixels with the printed pixels.

The image capturing step can entail the selection of suitable locations where it is known that the printed area is part of the physical image. This first step makes forging the secured document difficult since a user having a secured document, although knowing which method has been used, does not have to know which area or where the points printed with the first image have been distributed.

For example, a particularly complicated case is when the pixels forming the first image are distributed in an un-related manner scattering them throughout an area according to a location map of the different pixels only known by the authority responsible for securing. The image capturing process must know which points of the area are the ones which must be captured. Without this information it is not possible to recover an image which subsequently allows discrimination. This particular way of increasing the level of security applied to the invention is applicable to any embodiment of the invention. A way of carrying out this capturing process consists of capturing a rectangular area comprising the scattered distribution of pixels and selecting those pixels gathering the information of the pixels which do belong to the second image in the captured image. In this case the pixels of the captured image must be less than the pixels printed from the second image so that the areas located outside the area of the scattered pixels do not affect to the captured colour.

The use of different correlation techniques (for example by introducing weight functions) will allow carrying out different ways of discriminating which are adapted to particular characteristics of the secured object. A device adapted for carrying out this discrimination will comprise at least:
- image capturing means,
- a processing unit adapted for executing the discrimination method for example running a computer programme,
- output means for providing an output value corresponding to whether the document is accepted or rejected.

### Second Securing Method

A second example of securing according to claims 3 or 4 makes use of two characterization images increasing the level of security of the secured objects.

Those variables of the colour coordinates which are different from the variables A and B such that they are also preset in a particular way are taken into account in this embodiment.

In particular, at the time of assigning different variables to the variables A and B on the m elements of the colour list the following steps are carried out:
*a) establishing a variable C from among the coordinates (s₁, s₂,...,sₙ) different from A and B,*
*b) establishing a region D1 in the two-dimensional space of coordinates (A, C); and discretising the variables (A, C) such that the discrete values of A match the discrete values taken in the discretization of the space (A, B),* C is a third variable. Taking one of the already preset variables for establishing a pair of variables (A, C) means that the discretization the variables A and C requires taking into account that A has already been discretised. In this case this A discretization is made use of and the variable C is also discretised.
c) *grouping the colour list of m elements in j sub-groups such that the variable A takes one and the same value Aⱼ,* The colour list has already been generated, only the coordinates corresponding to variables different from A and B have not been determined. Given that A discretization in generating the first image has given rise to colours having the same value of A, these are grouped such that each sub-group shares the same value of A (Aⱼ).
*d) assigning one of the values of the variable C of the discretization (Aⱼ, C) contained in region D1 to each element for each sub-group j of Nⱼ elements, as coordinate C, and such that all the different values of* C *discretization comprised in the group of values (Aⱼ, C) are assigned to an element of the list,*
*e) establishing a function g(A, C) as the function that takes the integer value corresponding to the number of colours in the list with said values in the variables A and C, for each value of the variables A, C of the discretization of the region D1,*
*f) optionally establishing a correspondence between the values taken by g in the region D1 and a colour palette; and, providing a third characterization image on the region D1 such that each discretization point of the coordinates (A, C) is assigned with the colour corresponding to the value of g(A, C) given by the colour palette,*
*g) in the case that there are coordinates (s₁, s₂,...,sₙ) different from A, B and C, provide values for said coordinates.*

The technical effect of assignment of this type is that, when carrying out the discrimination by capturing an image, the generation of a first histogram in the variables A and B allows carrying out a comparison with the first image to establish a discrimination criterion. However, it is possible to carry out a second histogram on the same image in the variables A and C which allows increasing the security since this can be compared either with the function g or with the third image thus generated.

The definition of f(A, B) establishes an integer amount for each *Aⱼ* of the discretization resulting from the sum ∑ₖf(Aⱼ,Bₖ) where k is a mute index covering all the B discretization values. This integer resulting from the sum is distributed in the region D1 across the C discretization points for one and the same A*ⱼ*. It is thus verified that ∑ₖf(Aⱼ,Bₖ)=∑ₖf(Aⱼ,Cₖ) where now k also covers all the C discretization values in the second summation.

This integer distribution in the region D1 is the function g(A, C) and also allows generating another image, the third image, once the colour palette is defined.

These values are additional reference patterns for comparing, as has been mentioned above, the second histogram. Now, a discrimination criterion will be more demanding since for a secured object to be considered as genuine a specific threshold should pass two independent comparisons, that obtained upon applying a first correlation with the first image and a second correlation with the third image.

Values such that the colours are physically feasible are provided if the coordinate system has more variables, so that all the elements of the list are suitably defined colours.

A secured object according to a method according to claims 3 or 4 has given rise to two reference patterns:
- a first reference pattern established either by the function f(A, B) or by the first image; and,
- a second reference pattern established either by the function g(A, C) or by the third image.

The use of a second reference pattern allows increasing the degree of security in a discrimination method since, for a secured object to be considered as genuine it should additionally overcome a second comparison, that which is carried out between this second reference pattern and the histogram function obtained from the captured image but assessed with respect to the variables (A, C).

Therefore, the discrimination method described is modified by incorporating two additional steps just before the final step which establishes whether or not the object is genuine:
- a histogram of the image captured in the variables (A, C) used in the securing method according to claims 3 or 4 is generated preferably using the colour palette which is also used in said securing method,
- the degree of correlation between the histogram function characterising the object and the function g(A, C) associated with the third reference image; or, between the histogram function and a function defined from the third image is measured,

In this case an object will be rejected and will not be considered genuine if neither the first correlation nor the second correlation has been less than a specific threshold value and the rest will be accepted. The threshold values for the first correlation and for the second correlation can be different.

### A Third Securing Method

The method according to the invention provides images serving to secure objects where these images do not have to resemble visually identifiable objects, however, the invention does not prevent it from being so. However the use of colours which are not identifiable with any known object or meaningful pattern aid in preventing forgery is considered relevant describing a particular case in which it is possible to obtain a pattern in the securing image. In this embodiment the pattern of the printed image match the shape of the pattern of the first image, however, the invention can be carried out with different patterns in both images.

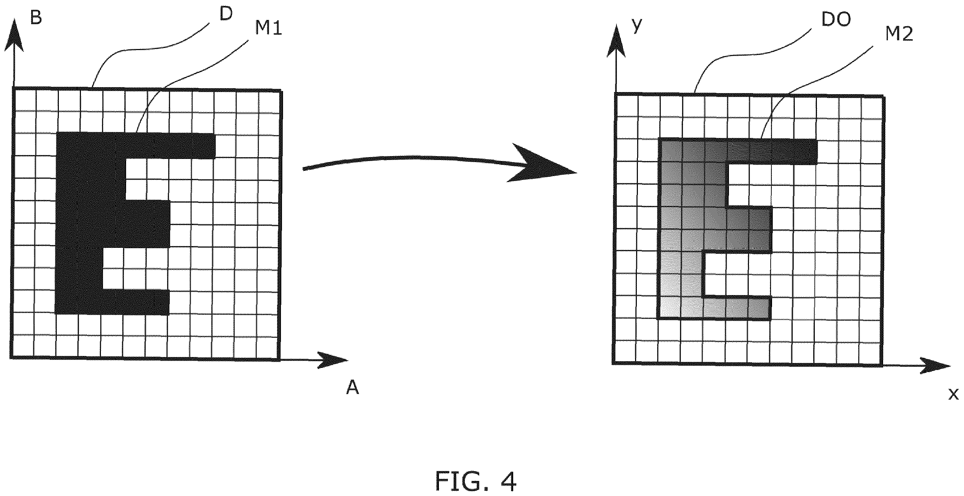

In Figure 4, and particularly in the first image which can be depicted in the region D, a border separating two groups of pixels has been highlighted, those which are found within this border identified as a mask (M1) and those which are outside this border. It would be possible, for example, to assign a colour to a group of points and a second colour to another group of points. The result would be that of a specific monochromatic pattern (that defined by the irregular depicted border) over a background contrasting in another colour.

In Figure 4 this pattern has been identified as a mask (M1) and the pixels therein have been painted in black colour, leaving the white colour pixels outside.

The region DO is shown on the right. This region can also be covered by a group of pixels the colour of which is determined in a colour coordinate system. Although the number of pixels of the image on the left is the same as that on the right, in practice it has already been seen that the image of the region DO will have a greater number. However, for clarity the same number has been used in the graphic representation of Figure 4.

In this embodiment the Lch colour coordinate system and the RGB coordinate system will be used where appropriate to take advantage of their properties. The two variables selected in the Lch coordinate system which will be used in the region D are A=L (luminosity) and B=h (hue).

Consider that now a second image in the physical region DO is generated in the following manner. The coordinate c, the saturation, takes a constant value which will be referred to as c_{ref}. Then c(x, y)=c_{ref} for all pixels of coordinates (x, y) of the region DO.

In each pixel of coordinates (x, y) of the region DO the luminosity L(x, y)=k₁*x and the hue h(x, y)=k2*y, where k₁ and k₂ are proportional constants is taken.

A second mask (M2) is defined with the shape matching the first mask (M1) only that now the values of its border are defined in the physical coordinates (x, y). Now the points which are outside the second mask (M2) are modified by assigning L(x, y)=100. The rest of the points of the image are not modified.

This image is expressed in another L*a*b* coordinate system by means of a change of coordinates to enable applying a transformation profile of the device itself; and expressed in this second device, is transformed into RGB by means of the T(L*a*b*, P) transformation which is but the reverse of the function T(RGB, P) through the profile P.

The result is a RGB(x, y) image the geometric location of outside the second mask (M2) of which is white given that L=100. The rest of the image will be coloured with a gradient according to the linear variation established by the constants k₁ and k₂.

This third method is identified as a way of carrying out claim 5 having distinguished the masks of both regions for nomenclature purposes.

Colours are thus defined for all the pixels of the region DO, the image obtained is a particular way of reorganising the pixels from the list which would be generated with the first image if A=L and B=h is taken. Its histogram Lh in the Lch colour space will show the shape of the mask (M1) according to a uniform function due to the construction by means of proportional constants in the physical space and its Lc histogram will be a segment parallel to the representation axis of "L", the projection in the axis "c" of which match the value c_{ref} and with a length comprised by the values of L covered by the mask domain.

This method of carrying out the invention has a first problem: the image in the physical region DO reproduces the mask and has the same geometric shape as the Lh hidden histogram such that it can give clues to the generation and/or discrimination method.

### A fourth securing method

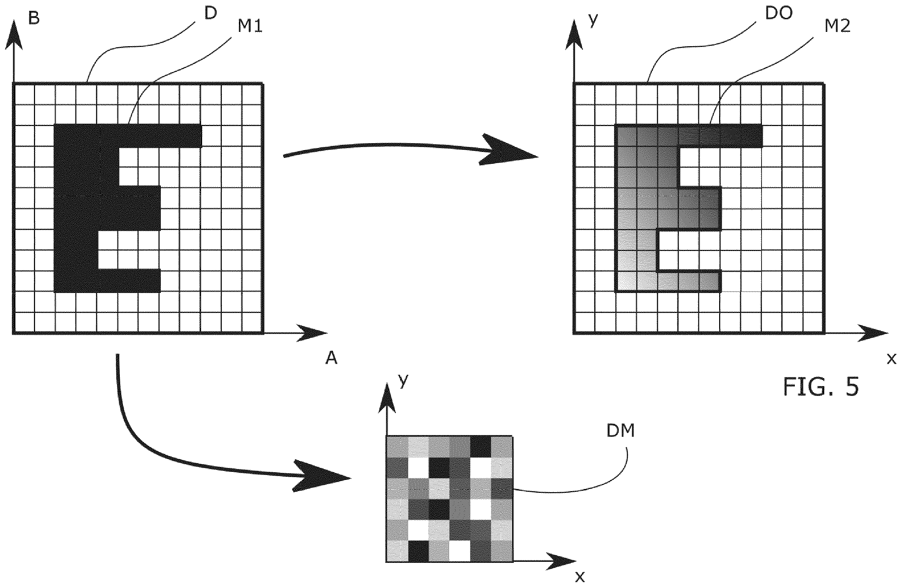

This fourth method shares any of the first steps of the methods above until the step in which the second image is obtained in the physical domain DO. In the first embodiment the second image shows an appearance of random colour distribution and the third securing example shows a mask matching the mask which is defined for the first image. This embodiment can be seen in Figure 5, where the result obtained in the third example is shown in the second image proving that, in the worst case scenario, it is possible to eliminate the information which was available on the mask.

The present method eliminates information of the shapes which can appear in the second image (for example the mask of the third example) and it performs the same according to the following steps:
- creating a list of all such colours present in the discretization region DO that verify L≠100. Each of the members of the list is capable of containing (for example by computer means) the colour coordinates corresponding to the colour of the pixel. In the third embodiment these N_{M} points or pixels which verify that L≠100 are those which are found within the mask (M).
- providing a third image formed by discretising a preferably rectangular domain DM, in which a colour from the list is assigned to each of the points.

The process of reorganising the points of an image does not have any effect on the histogram assessed on the same group of points or pixels at the time of discrimination. When several pixels have a constant colour value, these end up being accounted for by a single geometric location of the histogram as occurs with the points outside the mask.

A particular way of carrying out this method consists of creating a mosaic, for example a square, of N pixels. This mosaic is the third image.

Figure 5 shows the same elements as Figure 4 plus the third image generated by reorganising reproduced below in the domain DM. This third image has less pixels than the image from which it originated and these N pixels can be sub-group extracted from the colour list verifying that L≠100 the number N being able to be chosen for forming a square; or if a number N greater than the number of elements of the list is taken, they can randomly be completed for example, in white or repeating some of the colours of the list. These options are alternatives to the same method. Three cases considered by way of example are:
- N<N_{M}: In that case a sub-group of N_{M} elements are chosen such that the truncated elements are distributed uniformly in the domain DO,
- N>N_{M}: The missing elements are chosen by repeating N_{M} elements (which will not produce substantial variations in the histogram) or elements L=100 (which will be easily isolated in the histogram)
- N>>N_{M}: A multiple of N_{M} lists is chosen and the rest is chosen according to the process above.

As has already been described, there is a particular way of carrying out this embodiment in which instead of generating a square an image with a more complex shape is generated or even points of the document where each of the pixels of the list will be organised are determined. This option makes collecting points, which allow constructing the histogram, more difficult.

Once the image is generated, the same transformations of colour coordinate systems applied in the third method using a colour profile allows the accurate printing on a document for its securing.

The printing of a mosaic is possible from the image in the physical domain. What is being said with this is that each tile of the mosaic does not have to be formed by a single pixel since it could give rise to a third particularly small printed image if the resolution of the output device is high, rather areas (the tiles) are defined, the colour of which is that of the pixel of the image. That the image is scalable is thus indicated in its physical representation.

The lower image of Figure 5 is a depiction of one of these motifs depicted in greyscale showing random colour fluctuations between its tiles. The different grey levels show that they are different colours.

The discrimination process entails the reading of the image printed in an object or secured document. Therefore the image used for discrimination is slightly different from the specific image for securing the document. It has been experimentally proven that the scanning of this mosaic by means of low resolution (∼100 dpi) devices sufficiently reproduce the histogram with the hidden mask and allows for example the subsequent discrimination with a high level of confidence.

The secured document shows an image which can be integrated in images contained in the document. Only when each of the pixels of the image of the secured document is suitably read and the histogram is generated in the established variables will the pattern identifying it be revealed.

This pattern is not essential for the invention since comparing by means of a correlation operation does not require such a visible pattern but one revealing that the specification is original by naked eye. For example the selected pattern can reproduce a logotype of the authority issuing the secured documents. The pattern which is identifiable by naked eye allows the subsequent visual discrimination of documents by a user without the need for instruments designed for said discrimination.

The pseudo-random colour distribution of the mosaic means that each mosaic square (each tile) is surrounded by others with different colours, something which does not occur for example when the reorganisation has not been carried out since the colour gradient or gradients were continuous. This reorganisation has increased the distance between colours in adjacent tiles.

This situation means that the diaphony between pixels can be high. The result of this effect is a blurring of the histogram. In practice what occurs is that the image sensor, which allows image capturing, does not only measure the tile colour but also the average between the tile colour and that of neighbouring tiles. It has been observed that what occurs is that in the histogram between the positions of two neighbouring tiles there is a trail of points joining them. This trail corresponds to pixels having intermediate colours between a tile and the neighbouring tile in the scanning process. The following method is proposed with the aim of solving this problem and allowing the discrimination by image capturing means having resolutions comparables to the size of the tiles.

### Fifth Method

This fifth method proceeds like in the fourth method until obtaining a list of N pixels from the second physical image.

This particular case works with a square of N' pixels. If N' is greater than N, the list of N pixels or colours is completed by assigning them colours from the list. A new image is randomly generated in a square discretization domain DM. Initially the appearance of this image in domain DM is also like that shown in the lower part of Figure 5. This square domain can be physically depicted by a mosaic where each tile is of the colour of the pixel assigned to a discretization point as indicated in the example above.

The result (in the physical space) is a mosaic with randomly distributed coloured tiles.

Next, a function δE(C1, C2) is defined such that, given two colours C₁ and C₂, its value quantifies the penalty which the diaphony will create in the region D due to the spatial proximity of C₁ and C₂ in the region DO. An example of energy definition would be the function δE₂₀₀₀ proposed by the technical committee of the CIE (Committee Internationale of l'Eclairage) or the Eucledian distance between C₁ and C₂. The E denotes "energy" such that the function difference provides an assigned scalar which is referred to as "energy". Measuring the difference between colours is also a way of measuring the degree of diaphony.

A group of neighbouring pixels is determined for each pixel of the discretised domain DM among which the function δE is measured. The distance is thus measured, not between two pixels, but between a pixel and a pixel environment.

The energy value of a pixel is established as the sum extended to all its neighbours of the function δE assessed between the point and the neighbouring point, thus establishing the energy value in the discretization domain DM as the sum of the energy of the points of the domain DM, each assessed as has been indicated. It will be necessary to specify which points are the neighbouring points (for example taking into account the inner points and the border points) in each point of the domain DM.

Next, a reorganising method for reorganising the points in the domain DM is applied, such that the total energy of the system is minimum. Metaheuristic algorithms, such as that of simulated annealing can be applied for carrying out this task.

This way of energy minimization gives rise to different results changing the definition of the energy function and imposing additional conditions. It is possible, for example, to demand for periodic condition in one or in the two main directions such that the repetition of the mosaic makes the attachment "smooth".

### Sixth Method

Since the use of colour profiles is not a perfect calibration method (for example it uses linear interpolation between definition points of the profile function) and the scanned reading of the secured object or document is influenced by the wear and dirt build up among other things, suitably defined colour areas serving as control are incorporated on the same secured object or document during production.

It is possible to read these control areas where it is possible to measure the expected value of the colour and the one actually read at the time of discriminating a secured document. These deviations allow correcting the readings made on the images used for securing the document.

## Claims

1. A securing method for securing an object comprising the following steps:
a) establishing a device independent colour coordinate system with variables (s₁, s₂,...,sₙ) n>=2 being the number of coordinates of said system with the variables (s₁, s₂,...,sₙ) defined in the physically feasible colour domain,
b) establishing a pair of variables A, B from among the coordinates (s₁, s₂,...,sₙ) from the space of coordinates of a colour space, with A and B being different coordinates,
c) establishing a region D in the two-dimensional space of coordinates (A, B),
d) establishing a discretization in the variables A, B of the region D,
e) establishing a function f(A,B) the functional image of which is a positive integer value,
f) establishing a region DO in the physical space of coordinates (x, y) corresponding to a surface area of the object,
g) establishing a discretization in the variables x, y of the region DO, such that the number of discrete points *m* of the region DO is at least the sum of all the values f(A, B) for all (A, B) of the region D,
h) providing a colour list according to the following sub-steps:
h.1) establishing a colour with the value of the colour coordinates corresponding to the variables A and B by taking the value A and B, for each discretization point with coordinates (A, B) of the region D; and, repeated in the list as many times as indicated by the function f(A, B) the list making up a total of *m* elements
h.2) assigning values to the rest of the coordinates *(s₁, s₂,...,sₙ),* different from A and B, in the *m* elements such that the colour is physically feasible,
i) assigning the group of the *m* elements of the colour list to the *m* discretization points with coordinates (x, y) of the region DO,
j) providing the object with the resulting image on the region DO of its surface.

2. The method according to claim 1, **characterised in that**, once the function f(A,B) has been defined, further comprises establishing a correspondence between the values taken by f in the region D and a colour palette; and, providing a characterization image on the region D such that each discretization point with coordinates (A, B) is assigned with the colour corresponding to the value of f(A, B) given by the colour palette.

3. The method according to claim 1 or 2, **characterised in that** values are assigned to the rest of the coordinates different from A and B in the *m* elements in the following manner:
a) establishing a variable C from among the coordinates (s₁, s₂,...,sₙ) different from A and B,
b) establishing a region D1 in the two-dimensional space of coordinates (A, C); and a discretization of the variables (A, C) such that the discrete values of A match the discrete values taken in the discretization of the space (A, B),
c) grouping the colour list of *m* elements in *j* sub-groups such that the variable A takes one and the same value Aⱼ,
d) for each sub-group j of Nⱼ elements, assigning to each element as coordinate C one of the values of the variable C of the discretization (Aⱼ, C), contained in D1,
e) establishing a function g(A, C) as the function that, for each value of the variables A, C of the discretization of the region D1, takes the integer value corresponding to the number of colours in the list with said values in the variables A and C,
f) in the case that there are coordinates (s₁, s₂,...,sₙ) different from A, B and C, providing values for said coordinates.

4. The method according to claim 3, **characterised in that**, once the function g(A,C) has been defined, further comprises establishing a correspondence between the values taken by g in the region D1 and a colour palette; and, providing a further second characterization image on the region D1 such that each discretization point with coordinates (A, C) is assigned with the colour corresponding to the value of g(A, C) given by the colour palette.

5. The method according to claim 2, **characterised in that**:
a) the regions D and DO are rectangular regions of the same dimensions, having both a border matching each other and matching a mask M,
b) the colour coordinate system is Lch, i.e., coordinates (L, c, h) for all (A, B) belonging to the region D and for all (x, y) belonging to the region DO,
c) the characterization image in the region D is uniform, provided in the following manner: f(A, B) is selected to be constant, such that the image is of a single colour inside the mask M, and wherein, in all the points (A,B) which are outside the sub-region defined by the mask M(A,B), a second colour corresponding to the value zero for f(A, B) is established,
d) the resulting image is provided such that the colour assignment to each point of the discretization is carried out according to the following sub-steps:
d.1) in the region DO, defining the same binary mask with variables (x, y), M(x, y), giving rise to a sub-region of the region DO,
d.2) providing the resulting image such that for each coordinate (x, y) the colour with coordinates Lch(x, y) is assigned such that A=k₁*x, B=k₂*y; and C is constant, wherein k₁, and k₂ are pre-established constants,
d.3) in all the points (x, y) which are outside the sub-region defined by the mask M(x, y), establishing a colour such that it corresponds to one different from those present in the mask; preferably a colour such that L=100.

6. The method according to any of the preceding claims, **characterised in that**, starting from the resulting image, the following steps are carried out:
a) creating a list of all such colours present in the discretization region DO that verify L≠100,
b) providing a further third image formed by a discretization in a preferably rectangular domain DM, in which a colour from the list is assigned to each of the points.

7. The method according to claim 6, **characterised in that** colour assignment from the list to each of the points of the domain DM is random.

8. The method according to claim 6, **characterised in that** if the number of points of the discretization DM is greater than the number of colours in the list, a colour of the list is reassigned.

9. The method according to claim 6, **characterised in that** once the colour list is obtained, this list is reduced to a number N thereof.

10. The method according to any of claims 6 to 9, **characterised in that**:
a) the discretization domain DM is square,
b) colour assignment from the list in each of the points of the discretization DM is random,
c) a function δE(C₁, C₂) is defined such that, given two colours C₁ and C₂, its value quantifies the penalty of its diaphony in the region DO,
d) for each point of the discretised domain DM, a group of neighbouring points, on which the function δE is measured, is determined,
e) the energy value of a point is established as the sum extended to all its neighbours of the function δE assessed between the point and the neighbour,
f) the energy value in the discretization domain DM is established as the sum of the energies of the points of the domain DM,
g) a method for organising points in the domain DM is applied such that the total energy of the system is minimum.

11. The method according to claim 10, **characterised in that** the resulting image is provided on the secured object to allow the comparison in a subsequent reading by means of image capturing means.

12. The method according to any of the preceding claims, **characterised in that** before providing the object with the image for securing, the latter is transformed into a colour coordinate system by means of using a characteristic profile of the device used or a correspondence table to provide said image.

13. A discrimination method for discriminating objects secured according to any of the preceding claims, **characterised in that** the function f(A, B) generated in the securing method is established as a reference function in the two-dimensional domain of variables A and B corresponding to the coordinates of the colour coordinate system (s₁, s₂,...,sₙ) used to generate it, said discrimination method comprising the following steps:
a) a threshold value is established,
b) for each object:
b.1) the securing image of the object is captured by means of image capturing means,
b.2) a histogram of the image captured in the variables (A, B) used in the securing method is generated,
b.3) the degree of correlation with the reference function is measured,
b.4) those objects the correlation of which is less than the threshold value are rejected and the rest are accepted.

14. The discrimination method according to claim 13, **characterised in that** a second threshold value is established for an object secured according to a method according to claim 3 and, additionally, the measure of the degree of correlation between the reference function and the histogram in the variables (A, B) is carried out with at least the two following steps:
a) generating a histogram of the image captured in the variables (A, C) used in the securing method according to claim 3,
b) measuring the degree of correlation between the histogram function characterising the object and the function g(A, C) associated with the third reference image; or, between the histogram function and a function defined from the third image,
wherein the object is rejected and is not considered genuine if neither the first correlation is less than the first threshold nor the second correlation is less than second threshold; and the rest is accepted.

15. A computer program adapted for executing a method according to claim 13 or 14.

16. A document **characterised in that** it comprises an image obtained by any of the securing methods according to claims 1 to 12.

17. The document according to claim 16, **characterised in that** it has areas with control colours for calibrating the image capturing means.

18. An apparatus carrying out the discrimination of an object secured according to claim 13 or 14 comprising:
a) image capturing means,
b) a processing unit adapted for running a computer programme according to claim 15,
c) output means for providing an output value corresponding to whether the object is accepted or rejected.

19. The apparatus according to claim 18, **characterised in that** it has:
a) transporting means to provide a flow of objects to be discriminated; and,
b) operating means to operate on said flow of objects, these operating means being adapted for operating depending on whether the output means of the discrimination apparatus provide an accepted or rejected output value, removing the rejected objects from the flow.

## Patentansprüche

1. Sicherungsverfahren zur Sicherung eines Objekts, mit den Schritten:
a) Einrichten eines geräteunabhängigen Farbkoordinatensystems mit Variablen (s₁, s₂, ..., sₙ), wobei n>=2 die Anzahl der Koordinaten des Systems mit den Variablen s₁, s₂, ..., sₙ) ist, die in dem physikalischen möglichen Farbbereich definiert sind,
b) Erstellen eines Paares aus Variablen A, B aus den Koordinaten (s₁, s₂, ..., sₙ) aus dem Koordinatenraum eines Farbraums, wobei A und B unterschiedliche Koordinaten sind,
c) Erstellen eines Gebiets D in dem zweidimensionalen Koordinatenraum (A, B),
d) Erstellen einer Diskretisierung für die Variablen A, B des Gebiets D,
e) Erstellen einer Funktion f(A, B), deren Funktionsabbild ein positiver ganzer Wert ist,
f) Erstellen eines Gebiets D0 in dem physikalischen Koordinatenraum (x, y) entsprechend zu einer Oberfläche des Objekts,
g) Erstellen einer Diskretisierung in den Variablen x, y des Gebiets D0 derart, dass die Anzahl diskreter Punkte m des Gebiets D0 mindestens gleich der Summe aller Werte f(A, B) für alle (A, B) des Gebiets D ist,
h) Bereitstellen einer Farbliste entsprechend den folgenden Teilschritten:
h.1) Erstellen einer Farbe mit dem Wert der Farbkoordinaten, die den Variablen A und B entsprechen, durch Verwenden des Wertes A und B für jeden Diskretisierungspunkt mit Koordinaten (A, B) des Gebiets D; und bei Wiederholung in der Liste so oft, wie dies durch die Funktion f(A, B) angegeben ist, weist die Liste insgesamt m Elemente auf,
h.2) Zuordnen von Werten zu den restlichen Koordinaten (s₁, s₂, ..., sₙ), die sich von A und B unterscheiden, in den m Elementen derart, dass die Farbe physikalisch möglich ist,
i) Zuweisen der Gruppe der m Elemente der Farbliste zu den m Diskretisierungspunkten mit Koordinaten (x, y) des Gebiets D0,
j) Bereitstellen des Objekts mit dem resultierenden Bild auf dem Gebiet D0 seiner Oberfläche.

2. Verfahren nach Anspruch 1, **dadurch gekennzeichnet, dass** nach dem Definieren der Funktion f(A, B) das Verfahren ferner umfasst: Erstellen einer Zuordnung zwischen den von f in dem Gebiet D eingenommenen Werten und einer Farbpalette; und Bereitstellen eines Charakterisierungsbildes auf dem Gebiet D derart, dass jeder Diskretisierungspunkt mit Koordinaten (A, B) der Farbe zugewiesen wird, die dem Wert von f (A, B) entspricht, der durch die Farbpalette gegeben ist.

3. Verfahren nach Anspruch 1 oder 2, **dadurch gekennzeichnet, dass** dem Rest der Koordinaten, die sich von A und B unterscheiden, Werte in den m Elementen in der folgenden Weise zugewiesen werden:
a) Erstellen einer Variablen C aus den Koordinaten (s₁, s₂, ..., sₙ), die sich von A und B unterscheidet,
b) Erstellen eines Gebiets D1 in dem zweidimensionalen Koordinatenraum (A, C); und einer Diskretisierung der Variablen (A, C) derart, dass die diskreten Werte von A mit den diskreten Werten übereinstimmen, die bei der Diskretisierung des Raums (A, B) verwendet werden,
c) Gruppieren der Farbliste aus m Elementen in j Untergruppen derart, die die Variable A ein und denselben Wert Aⱼ annimmt,
d) für jede Untergruppe j aus Nⱼ Elementen, Zuweisen eines der Werte der Variablen C der Diskretisierung (Aⱼ, C), die in D1 enthalten sind, zu jedem Element als Koordinate C,
e) Erstellen einer Funktion g(A, C) als die Funktion, die für jeden Wert der Variablen A, C der Diskretisierung des Gebiets D den ganzzahligen Wert annimmt, der der Anzahl an Farben in der Liste mit den Werten in den Variablen A und C entspricht,
f) wenn es Koordinaten (s₁, s₂, ..., sₙ) gibt, die sich von A, B und C unterscheiden, Bereitstellen von Werten für die Koordinaten.

4. Verfahren nach Anspruch 3, **dadurch gekennzeichnet, dass** sobald die Funktion g(A, C) definiert ist, das Verfahren ferner umfasst: Erstellen einer Zuordnung zwischen den Werten, die g in dem Gebiet D1 annimmt, und einer Farbpalette; und Bereitstellen eines weiteren zweiten Charakterisierungsbildes auf dem Gebiet D1 derart, dass jeder Diskretisierungspunkt mit Koordinaten (A, C) derjenigen Farbe zugewiesen ist, die dem Wert von g(A, C) entspricht, der durch die Farbpalette gegeben ist.

5. Verfahren nach Anspruch 2, **dadurch gekennzeichnet, dass**:
a) die Gebiete D und D0 rechteckige Gebiete mit gleichen Abmessungen sind, die beide eine Grenze haben, die übereinstimmt und die mit einer Maske M übereinstimmt,
b) das Farbkoordinatensystem Lch ist, d.h. Koordinaten (L, c, h) für alle (A, B), die zu dem Gebiet D gehören, und für alle (x, y), die zu dem Gebiet D0 gehören,
c) das Charakterisierungsbild in dem Gebiet D gleichmäßig ist, das in der folgenden Weise vorgesehen ist: f(A, B) ist gleich konstant gesetzt derart, dass das Bild innerhalb der Maske M aus einer einzigen Farbe ist, und wobei in allen Punkten (A, B), die außerhalb des Untergebiets liegen, das durch die Maske M(A, B) definiert ist, eine zweite Farbe, die dem Farbwert Null entspricht, für f(A, B) erstellt wird,
d) das resultierende Bild derart bereitgestellt wird, dass die Farbzuweisung zu jedem Punkt der Diskretisierung entsprechend den folgenden Unterschritten ausgeführt wird;
d.1) in dem Gebiet D0, Definieren der gleichen binären Maske mit Variablen (x, y), M(x, y), wodurch ein Untergebiet des Gebiets D0 entsteht,
d.2) Bereitstellen des resultierenden Bildes derart, dass für jede Koordinate (x, y) die Farbe mit den Koordinaten Lch (x, y) derart zugewiesen wird, dass A=k₁*x, B=k₂*y; und C konstant ist, wobei k₁ und k₂ im Voraus erstellte Konstanten sind,
d.3) in allen Punkten (x, y), die außerhalb des durch die Maske M(x, y) definierten Untergebiets liegen, Erstellen einer Farbe derart, dass sie einer Farbe entspricht, die sich von jenen unterscheidet, die in der Maske vorhanden sind; vorzugsweise eine Farbe, etwa L=100.

6. Verfahren nach einem der vorhergehenden Ansprüche, **dadurch gekennzeichnet, dass** ausgehend von dem resultierenden Bild die folgenden Schritte ausgeführt werden:
a) Erzeugen einer Liste aller derartigen Farbe, die in dem Diskretisierungsgebiet D0 vorhanden sind, die nachweislich L≠100 haben,
b) Bereitstellen eines weiteren dritten Bildes, das durch eine Diskretisierung in einem bevorzugt rechteckigen Bereich DM erzeugt wird, in welchem jedem der Punkte eine Farbe aus der Liste zugewiesen wird.

7. Verfahren nach Anspruch 6, **dadurch gekennzeichnet, dass** die Farbzuweisung aus der Liste zu jedem der Punkte des Bereichs DM zufällig ist.

8. Verfahren nach Anspruch 6, **dadurch gekennzeichnet, dass** wenn die Anzahl an Punkten der Diskretisierung DM größer als die Anzahl an Farben in der Liste ist, eine Farbe der Liste neu zugewiesen wird.

9. Verfahren nach Anspruch 6, **dadurch gekennzeichnet, dass**, sobald die Farbliste erhalten wird, diese Liste auf eine Anzahl N davon reduziert wird.

10. Verfahren nach einem der Ansprüche 6 bis 9, **dadurch gekennzeichnet, dass**:
a) der Diskretisierungsbereich DM quadratisch ist,
b) eine Farbzuweisung aus der Liste zu jedem der Punkte der Diskretisierung DM zufällig ist,
c) eine Funktion δE (c₁, c₂) derart definiert wird, dass bei zwei Farben C₁ und C₂, ihr Wert die Einbuße ihrer Diaphonie in dem Gebiet D0 quantitativ angibt,
d) für jeden Punkt des diskretisierten Bereichs DM eine Gruppe von benachbarten Punkten ermittelt wird, an denen die Funktion δE gemessen wird,
e) der Energiewert eines Punktes erstellt wird als die Summe, die auf alle Nachbarn der Funktion δE ausgeweitet wird, die zwischen dem Punkt und dem Nachbar bewertet wird,
f) der Energiewert in dem Diskretisierungsbereich DM als die Summe der Energien der Punkte des Bereichs DM erstellt wird,
g) ein Verfahren zur Einordnung von Punkten in dem Bereich DM derart angewendet wird, dass die Gesamtenergie des Systems minimal wird.

11. Verfahren nach Anspruch 10, **dadurch gekennzeichnet, dass** das resultierende Bild auf dem gesicherten Objekt so bereitgestellt wird, dass der Vergleich bei einem nachfolgenden Auslesen mittels einer Bilderfassungseinrichtung möglich ist.

12. Verfahren nach einem der vorhergehenden Ansprüche, **dadurch gekennzeichnet, dass**, vor dem Bereitstellen des Objekts mit dem Bild zur Sicherung, das Bild in ein Farbkoordinatensystem transformiert wird mittels der Anwendung eines charakteristischen Profils des verwendeten Geräts oder mittels einer Zuordnungstabelle zur Bereitstellung des Bildes.

13. Unterscheidungsverfahren zur Unterscheidung von Objekten, die entsprechend einem der vorhergehenden Ansprüche gesichert werden, **dadurch gekennzeichnet, dass** die Funktion f(A, B), die in dem Sicherungsverfahren erzeugt wird, als eine Referenzfunktion in dem zweidimensionalen Bereich von Variablen A und B erstellt wird, die den Koordinaten des Farbkoordinatensystems (s₁, s₂, ..., sₙ) entsprechen, die zu ihrer Erzeugung verwendet werden, wobei das Unterscheidungsverfahren die folgenden Schritte umfasst:
a) Erstellen eines Schwellenwertes,
b) für jedes Objekt:
b.1) Erfassen des zu sichernden Bildes des Objekts mittels einer Bilderfassungseinrichtung,
b.2) Erzeugen eines Histogramms des erfassten Bildes für die Variablen (A, B), die in dem Sicherungsverfahren verwendet werden,
b.3) Messen des Grades an Korrelation zu der Referenzfunktion,
b.4) Zurückweisen der Objekte, deren Korrelation kleiner als der Schwellenwert ist, und Akzeptieren des Restes.

14. Unterscheidungsverfahren nach Anspruch 13, **dadurch gekennzeichnet, dass** ein zweiter Schwellenwert für ein Objekt erstellt wird, das gemäß einem Verfahren nach Anspruch 3 gesichert wird, und zusätzlich das Messen des Grades an Korrelation zwischen der Referenzfunktion und dem Histogramm für die Variablen (A, B) mit mindestens einem der zwei folgenden Schritte ausgeführt wird:
a) Erzeugen eines Histogramms des erfassten Bildes für die Variablen (A, C), die bei dem Sicherungsverfahren nach Anspruch 3 verwendet werden,
b) Messen des Grades an Korrelation zwischen der Histogrammfunktion, die das Objekt charakterisiert, und der Funktion g(A, C), die dem dritten Referenzbild zugeordnet ist, oder zwischen der Histogrammfunktion und einer Funktion, die aus dem dritten Bild definiert wird,
wobei das Objekt zurückgewiesen und nicht als authentisch erachtet wird, wenn weder die erste Korrelation kleiner als der erste Schwellenwert ist, noch die zweite Korrelation kleiner als der zweite Schwellenwert ist; und der Rest wird akzeptiert.

15. Computerprogramm, das ausgebildet ist, ein Verfahren nach Anspruch 13 oder 14 auszuführen.

16. Dokument, **das dadurch gekennzeichnet ist, dass** es ein Bild enthält, dass durch eines der Sicherungsverfahren nach Anspruch 1 bis 12 erhalten wird.

17. Dokument nach Anspruch 16, **dadurch gekennzeichnet, dass** es Bereiche mit Kontrollfarben zum Kalibrieren der Bildaufnahmeeinrichtung aufweist.

18. Vorrichtung zum Ausführen der Unterscheidung eines Objekts, das gemäß Anspruch 13 oder 14 gesichert ist, mit:
a) einer Bildaufnahmeeinrichtung,
b) einer Verarbeitungseinheit, die ausgebildet ist, ein Computerprogramm nach Anspruch 15 auszuführen,
c) einer Ausgabeeinrichtung zur Bereitstellung eines Ausgabewertes, der angibt, ob das Objekt akzeptiert oder zurückgewiesen ist.

19. Vorrichtung nach Anspruch 18, **dadurch gekennzeichnet, dass** sie aufweist:
a) eine Transporteinrichtung zur Bereitstellung eines Stroms aus Objekten, die zu unterscheiden sind;
b) eine Bearbeitungseinrichtung, um den Strom aus Objekten zu bearbeiten, wobei diese Bearbeitungseinrichtung ausgebildet ist, abhängig davon zu arbeiten, ob die Ausgabeeinrichtung der Unterscheidungsvorrichtung einen akzeptierten oder zurückgewiesenen Ausgabewert bereitstellt, wobei die zurückgewiesenen Objekte aus dem Strom entfernt werden.

## Revendications

1. Procédé de fixation pour fixer un objet comprenant les étapes suivantes :
a) établir d'un système de coordonnées de couleurs indépendant du dispositif avec des variables (s₁, s₂, ..., sₙ) *n>=2* étant le nombre de coordonnées dudit système avec les variables (s₁, s₂, ..., sₙ) défini dans le domaine de couleur physiquement réalisables,
b) établir une paire de variables A, B parmi les coordonnées (s₁, s₂, ..., sₙ) à partir de l'espace de coordonnées d'un espace de couleur, où A et B sont des coordonnées différentes,
c) établir une région D dans l'espace bidimensionnel de coordonnées (A, B),
d) établir une discrétisation dans les variables A, B de la région D,
e) établir une fonction f(A, B) dont l'image fonctionnelle est une valeur entière positive,
f) établir une région DO dans l'espace physique de coordonnées (x, y) correspondant à une aire de surface de l'objet,
g) établir une discrétisation dans les variables x, y de la région DO, de sorte que le nombre de points discrets *m* de la région DO soit au moins la somme de toutes les valeurs f(A, B) pour tous les (A, B) de la région D,
h) fournir une liste de couleurs selon les sous-étapes suivantes :
h.1) établir une couleur avec la valeur des coordonnées de couleur correspond aux variables A et B en prenant la valeur A et B, pour chaque point de discrétisation avec des coordonnées (A, B) de la région D ; et, répété dans la liste autant de fois qu'indiqué par la fonction f(A, B) la liste créant un total de *m* éléments,
h.2) assigner valeurs au restant des coordonnées (s₁, s₂, ..., sₙ), différentes de A et B, dans les *m* éléments de sorte que la couleur est physiquement réalisable,
i) assigner le groupe des *m* éléments de la liste de couleur aux *m* points de discrétisation avec des coordonnées (x, y) de la région DO,
j) fournir de l'objet avec l'image résultante sur la région DO de sa surface.

2. Procédé selon la revendication 1, **caractérisé en ce que**, une fois que la fonction f(A, B) a été définie, il comprend en outre l'établir une correspondance entre les valeurs prises par f dans la région D et une palette de couleur ; et, la fournir une image de caractérisation sur la région D de sorte que chaque point de discrétisation avec des coordonnées (A, B) est assigné avec la couleur correspondant à la valeur de f(A, B) donnée par la palette de couleur.

3. Procédé selon la revendication 1 ou 2, **caractérisé en ce que** des valeurs sont assignées au restant des coordonnées différentes de A et B dans les *m* éléments de la manière suivante :
a) établir une variable C parmi les coordonnées (s₁, s₂, ..., sₙ) différentes de A et B,
b) établir une région D1 dans l'espace bidimensionnel de coordonnées (A, C) ; et une discrétisation des variables (A, C) de sorte que les valeurs discrètes de A correspondent aux valeurs discrètes prises dans la discrétisation de l'espace (A, B),
c) regrouper la liste de couleurs de *m* éléments en j sous-groupes de sorte que la variable A prenne la même et une valeur Aⱼ,
d) pour chaque sous-groupe j de Nⱼ éléments, assigner à chaque élément en tant que coordonnée C d'une des valeurs de la variable C de la discrétisation (Aⱼ, C), contenues dans D1,
e) établir une fonction g(A, C) en tant que fonction qui, pour chaque valeur des variables A, C de la discrétisation de la région D1, prend la valeur entière correspondant au nombre de couleurs dans la liste avec lesdites valeurs dans les variables A et C,
f) dans le cas où il y a des coordonnées (s₁, s₂, ..., sₙ) différentes de A, B et C, fourniture de valeurs pour lesdites coordonnées.

4. Procédé selon la revendication 3, **caractérisé en ce que**, une fois que la fonction g(A, C) a été définie, il comprend en outre l'établissement d'une correspondance entre les valeurs prises par g dans la région D1 et une palette de couleurs ; et, la fourniture d'une autre deuxième image de caractérisation sur la région D1 de sorte que chaque point de discrétisation avec des coordonnées (A, C) soit affecté avec la couleur correspondant à la valeur de g(A, C) donnée par la palette de couleurs.

5. Procédé selon la revendication 2, **caractérisé en ce que** :
a) les régions D et DO sont des régions rectangulaires de mêmes dimensions, présentant toutes deux un bord correspondant l'un à l'autre et correspondant à un masque M,
b) le système de coordonnées de couleur est Lch, c'est-à-dire, des coordonnées (L, c, h) pour tous les (A, B) appartenant à la région D et pour tous les (x, y) appartenant à la région DO,
c) l'image de caractérisation dans la région D est uniforme, fournie de la manière suivante : f(A, B) est sélectionnée pour être constante, de sorte que l'image est d'une couleur unique à l'intérieur du masque M, et où, dans tous les points (A, B) qui sont à l'extérieur de la sous-région définie par le masque M(A, B), une seconde couleur correspondant à la valeur zéro pour f(A, B) est établie,
d) l'image résultante est fournie de sorte que assignation de couleur à chaque point de la discrétisation soit réalisée selon les sous-étapes suivantes :
d.1) dans la région DO, définir du même masque binaire avec des variables (x, y), M(x, y), donnant lieu à une sous-région de la région DO,
d.2) fournir de l'image résultante de sorte que pour chaque coordonnée (x, y) la couleur avec des coordonnées Lch(x, y) est affectée de telle sorte que A = k₁ * x, B = k₂ * y ; et C est constant, k₁ et k₂ étant des constantes préétablies,
d.3) dans tous les points (x, y) qui sont à l'extérieur de la sous-région définie par le masque M(x, y), établir d'une couleur de sorte qu'elle corresponde à l'une différente de celles présentes dans le masque ; de préférence une couleur telle que L = 100.

6. Procédé selon l'une quelconque des revendications précédentes, **caractérisé en ce que**, en partant de l'image résultante, les étapes suivantes sont réalisées :
a) créer une liste de toutes les couleurs présentes dans la région DO de discrétisation qui vérifient L ≠ 100,
b) fournir une autre troisième image formée par une discrétisation dans un domaine DM de préférence rectangulaire, dans lequel une couleur depuis la liste est affectée à chacun des points.

7. Procédé selon la revendication 6, **caractérisé en ce que** l'assignation de couleur depuis la liste à chacun des points du domaine DM est aléatoire.

8. Procédé selon la revendication 6, **caractérisé en ce que**, si le nombre de points du DM de discrétisation est supérieur au nombre de couleurs dans la liste, une couleur de la liste est réassignée.

9. Procédé selon la revendication 6, **caractérisé en ce qu'**une fois la liste de couleurs est obtenue, cette liste est réduite à un nombre N de celle-ci.

10. Procédé selon l'une quelconque des revendications 6 à 9, **caractérisé en ce que** :
a) le domaine DM de discrétisation est carré,
b) l'assignation de couleur depuis la liste dans chacun des points du DM de discrétisation est aléatoire,
c) une fonction δE(C₁, C₂) est définie de sorte que, étant donné deux couleurs C₁ et C₂, sa valeur quantifie la pénalité de sa diaphonie dans la région DO,
d) pour chaque point du domaine DM discrétisé, un groupe de points de voisinage, sur lequel la fonction δE est mesurée, est déterminé,
e) la valeur d'énergie d'un point est établie en tant que somme étendue à tous ses voisins de la fonction δE évaluée entre le point et le voisin,
f) la valeur énergétique dans le domaine DM de discrétisation est établie en tant que somme des énergies des points du domaine DM,
g) un procédé pour organiser des points dans le domaine DM est appliqué de sorte que l'énergie totale du système soit minimale.

11. Procédé selon la revendication 10, **caractérisé en ce que** l'image résultante est fournie sur l'objet fixé pour permettre la comparaison dans une lecture ultérieure au moyen de moyens de capture d'image.

12. Procédé selon l'une quelconque des revendications précédentes, **caractérisé en ce qu'**avant de fournir à l'objet l'image pour fixation, cette dernière est transformée en un système de coordonnées de couleurs en utilisant un profil caractéristique du dispositif utilisé ou un tableau de correspondance pour fournir ladite image.

13. Procédé de discrimination pour discriminer des objets fixés selon l'une quelconque des revendications précédentes, **caractérisé en ce que** la fonction f(A, B) produite dans le procédé de fixation est établie en tant que fonction de référence dans le domaine bidimensionnel de variables A et B correspondant aux coordonnées du système de coordonnées de couleur (s₁, s₂, ..., sₙ) utilisé pour la produire, ledit procédé de discrimination comprenant les étapes suivantes :
a) une valeur de seuil est établie,
b) pour chaque objet :
b.1) l'image de fixation de l'objet est capturée au moyen de moyens de capture d'image,
b.2) un histogramme de l'image capturée dans les variables (A, B) utilisées dans le procédé de fixation est produit,
b.3) le degré de corrélation avec la fonction de référence est mesuré,
b.4) les objets pour lesquels la corrélation est inférieure à la valeur de seuil sont rejetés et le restant sont acceptés.

14. Procédé de discrimination selon la revendication 13, **caractérisé en ce qu'**une seconde valeur de seuil est établie pour un objet fixé selon un procédé selon la revendication 3 et, de surcroît, la mesure du degré de corrélation entre la fonction de référence et l'histogramme dans les variables (A, B) est réalisée avec au moins les deux étapes suivantes :
a) produire d'un histogramme de l'image capturée dans les variables (A, C) utilisées dans le procédé de fixation selon la revendication 3,
b) mesure du degré de corrélation entre la fonction d'histogramme caractérisant l'objet et la fonction g(A, C) associée à la troisième image de référence ; ou, entre la fonction d'histogramme et une fonction définie depuis la troisième image,
dans lequel l'objet est rejeté et n'est pas considéré comme authentique si ni la première corrélation est inférieure au premier seuil, ni la seconde corrélation est inférieure au second seuil ; et le restant est accepté.

15. Programme d'ordinateur adapté pour exécuter un procédé selon la revendication 13 ou 14.

16. Document **caractérisé en ce qu'**il comprend une image obtenue par l'un quelconque des procédés de fixation selon les revendications 1 à 12.

17. Document selon la revendication 16, **caractérisé en ce qu'**il présente des aires avec des couleurs de contrôle pour calibrer les moyens de capture d'image.

18. Appareil réalisant la discrimination d'un objet fixé selon la revendication 13 ou 14, comprenant :
a) des moyens de capture d'image,
b) une unité de traitement adaptée pour exécuter un programme d'ordinateur selon la revendication 15,
c) des moyens de sortie pour fournir une valeur de sortie correspondant à selon que l'objet est accepté ou rejeté.

19. Appareil selon la revendication 18, **caractérisé en ce qu'**il a :
a) des moyens de transport pour fournir un flux d'objets destinés à être discriminés ; et,
b) des moyens de fonctionnement pour opérer sur ledit flux d'objets, ces moyens de fonctionnement étant adaptés pour fonctionner selon que les moyens de sortie de l'appareil de discrimination fournissent une valeur de sortie acceptée ou rejetée, retirant les objets rejetés hors du flux.
